(19) **Europäisches Patentamt**
**European Patent Office**
**Office européen des brevets**

(11) **EP 1 188 284 B1**

(12) **EUROPEAN PATENT SPECIFICATION**

(45) Date of publication and mention
of the grant of the patent:
**13.07.2016 Bulletin 2016/28**

(21) Application number: **00938236.7**

(22) Date of filing: **09.06.2000**

(51) Int Cl.:
*H04L 27/26* ^(2006.01)    *H04L 25/03* ^(2006.01)

(86) International application number:
**PCT/US2000/015836**

(87) International publication number:
**WO 2000/079747 (28.12.2000 Gazette 2000/52)**

(54) **SYSTEM AND METHOD FOR DATA SCRAMBLING TO REDUCE THE CREST FACTOR IN AN OFDM WAVEFORM**

SYSTEM UND VERFAHREN ZUR DATAVERSCHLÜSSELUNG MIT EINEM REDUZIERTEN SPITZEN-/MITTELWERT-VERHÄLTNIS IN EINER OFDM-WELLENFORM

SYSTÈME ET PROCÉDÉ DE BROUILLAGE DE DONNÉES AFIN DE RÉDUIRE LE FACTEUR DE CRÊTE DANS UNE FORME D'ONDE MULTIPLEXÉE PAR RÉPARTITION EN FRÉQUENCE ORTHOGONALE (MRFO)

(84) Designated Contracting States:
**AT BE CH CY DE DK ES FI FR GB GR IE IT LI LU MC NL PT SE**

(30) Priority: **23.06.1999 US 140648 P**

(43) Date of publication of application:
**20.03.2002 Bulletin 2002/12**

(73) Proprietor: **AT&T WIRELESS SERVICES, INC.**
**Redmond,**
**Washington 98052 (US)**

(72) Inventors:
• **GARCIA, Salvador, Jr.**
**Redmond, WA 98052 (US)**
• **GORMLEY, Eamonn**
**Seattle, WA 98119 (US)**
• **HOOLE, Elliott**
**Redmond, WA 98053 (US)**

(74) Representative: **Asquith, Julian Peter et al**
**Marks & Clerk LLP**
**Fletcher House**
**Heatley Road**
**The Oxford Science Park**
**Oxford OX4 4GE (GB)**

(56) References cited:
**EP-A2- 0 331 115      WO-A-99/29078**
**WO-A1-97/49207**

• **VAN EETVELT P ET AL: "PEAK TO AVERAGE POWER REDUCTION FOR OFDM SCHEMES BY SELECTIVE SCRAMBLING" ELECTRONICS LETTERS, IEE, vol. 32, no. 21, 10 October 1996 (1996-10-10), pages 1963-1964, XP000683518 Stevenage, United Kingdom ISSN: 0013-5194**
• **HO T F ET AL: "CONSTRUCTION OF SPECTRALLY EFFICIENT LOW-CREST WAVEFORMS FOR MULTICARRIER CDMA SYSTEMS" INTERNATIONAL CONFERENCE ON UNIVERSAL PERSONAL COMMUNICATIONS, IEEE, 6 November 1995 (1995-11-06), pages 522-526, XP000672454 New York, USA**

**Description**

**Background of the Invention**

This invention relates generally to communication systems and, more particularly, to a technique which minimizes the transmitted peak power levels in an orthogonal frequency division multiplexed (OFDM) waveform by randomizing the digital data being communicated.

The frequency tones transmitted in an OFDM system are purposely spaced so that the frequency components of the tones are non-additive. That is, multiple tones can be received in a wideband receiver without a first tone cancelling out or adding to the amplitude of neighbouring tones. This permits the communication system to transmit and receive tones simultaneously, without mutual interference. However, these orthogonal frequency components still interact (are additive) with each other from the perspective of time domain analysis.

In the exemplary OFDM system described in Provisional Application, Serial No. 60/140,648, many orthogonal frequency tones are transmitted or received simultaneously. These tone frequency sums are ultimately communicated by base stations and remote units through a wired or radio frequency (RF) link using power amplifiers and receivers. At any one instant, the waveform being transmitted by a power amplifier is a voltage which is a sum of the voltages of the tones. If the phase relationship between tones is random, then the peak voltage falls within a well defined range. For example, with 288 tones of equal magnitude, but random phases, the peak voltage in the time domain OFDM waveform is distributed in the range of 8 dB to 14 dB above the RMS voltage level, but may be as high as 27 dB above it when the phases align. This large peak voltage is known as "cresting" of the OFDM waveform.

The OFDM system requires a high degree of linearity in the communication of the OFDM tones. Non-linear transmission or reception of a first signal generates harmonic and spurious products which have a frequency relationship to the first signal. In a system that depends on frequency orthogonality, the non-linear communication of tones will generate tone products which act to destroy this relationship of orthogonality. Alternately stated, in an OFDM system which relies upon the amplitude components of the tones to relay information, it is critical that the amplitude information is not degraded in the amplification process. Thus, in an OFDM system it is necessary to use linear power amplifiers to transmit the OFDM waveform.

As is well known in the art, the bias on these types of amplifiers (Class A) must be set especially high. Class A amplifiers draw a great deal of current regardless of the RMS value of the actual power being transmitted. The amount of power drawn by a Class A amplifier is proportional to the peak voltage that the amplifier must be capable of amplifying. It is therefore desirable to keep expected peak waveform voltage to a minimum. This permits a linear amplifier with a minimum dynamic range to be used, without clipping the OFDM waveform and thus causing non-linearities. This also minimizes the power consumption of the hardware, which extends the life of the equipment, and in the case of battery powered devices, such as remote units, extends the life of the batteries.

These same problems are a concern in the design of the receiver. Although receivers do not generally consume a great of deal power, as compared to the power amplifier, dynamic range is critical. The receiver must have a dynamic range large enough to recover a transmitted signal at a large range of input power levels, where the strength of the received signal corresponds to the distance between the receiver and transmitter.

In the OFDM system, digital data is modulated using QAM, QPSK, PSK, or other schemes, as are well known in the art. These modulation systems rely on the amplitude and/or phase of a symbol to convey information. Ultimately, the phase and/or amplitude of the OFDM tone is used for communication of information. In voice communications, and in many data communications, the information and, therefore, the patterns of digital data representing the information are random. The random pattern of digital data translates through the modulation process into a random selection of tone phases and amplitudes. When this random collection of OFDM tone frequencies are transmitted simultaneously, it is statistically unlikely that they will add to create a very large peak in the time domain OFDM signal. In this situation, there is no need to be concerned with saturating an OFDM power amplifier designed to operate in this scenario. Saturation of the power amplifier due to a large peak voltage is more likely to occur when the digital data to be communicated is highly correlated or the same, for example, when information is being sent that represents an image with a highly uniform background. Then, the data consists of a long pattern of "0"s or "1"s. In this circumstance, where the digital data forms a repetitious pattern, it is likely that the OFDM tones will have a highly correlated phase and amplitude relationship. This correlation of the phase leads to a large peak in the OFDM waveform. In order to handle this large peak without clipping the OFDM waveform, the power amplifier must operate in a larger dynamic range than the range resulting from a random combination of tone amplitude and phases. Operation in a large dynamic range results in the power amplifier consuming more power.

Van Eetvelt P et al: "Peak to Average Power Reduction for OFDM Schemes by Selective Scrambling" Electronics Letters, IEE, vol. 32, No. 21, 10 October 1996 (1996-10-10), pages 1963-1964, XP000683518 Stevenage, United Kingdom ISSN: 0013-5194 describes a selective scrambling technique for reducing the peak to average power ratio (PAPR) in QPSK-OFDM systems, while incurring low redundancy.

It would be advantageous if the peak power levels required for transmission in an OFDM communication system could be kept to a minimum to preserve linearity, reduce power consumption, and simplify the design of the transmitter and receiver.

It would be advantageous if the dynamic range of the power levels required for transmission in an OFDM communication system could be minimized to avoid clipping in the power amplifier and to reduce power consumption.

## Summary of the Invention

The invention provides a method for minimizing the peak voltage of tones in an OFDM communication, and a system for the communication of OFDM tones, as set out in the accompanying claims.

## Brief Description of the Drawings

Fig. 1 is a schematic block diagram of the present inventive system for the communication of OFDM tones with minimized transmitted peak power levels.
Fig. 2 illustrates the randomization process which scrambles digital data patterns in a message.
Fig. 3 illustrates a table of scrambling vectors that are used by both the scrambler of the transmitter, and the descrambler of the receiver (see Fig. 1).
Fig. 4 is a 16-QAM constellation for encoding data using Gray Coding (prior art).
Fig. 5 illustrates an OFDM time domain waveform of 288 tones with no scrambling.
Fig. 6 illustrates an OFDM time domain waveform of 288 tones with scrambling.
Fig. 7 is a flowchart illustrating a method for transmitting an OFDM waveform at a minimized peak power level.

## Detailed Description of the Preferred Embodiment

The specific data randomization process presented in the invention has been tailored for use with the OFDM communication system described in provisional application No. 60/140,648, filed June 23, 1999 and entitled "Method for High Speed Data Communications in a Personal Wireless Access Network". Highlights of the OFDM system will be represented below to help illustrate the present invention. However, it should be understood that these concepts are applicable to other systems which rely on random data streams for maximum efficiency.

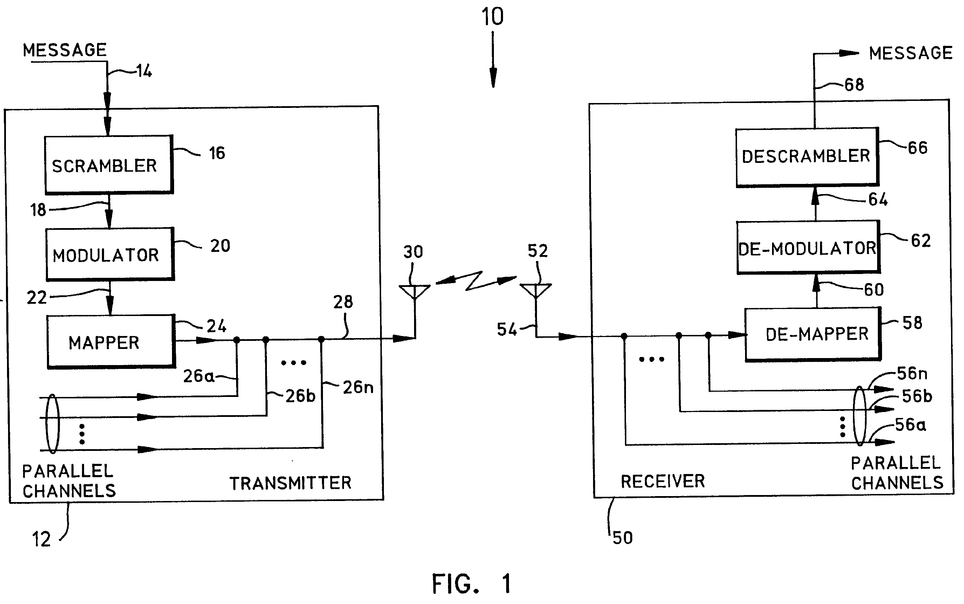

Fig. 1 is a schematic block diagram of the present inventive system for the communication of OFDM tones with minimized transmitted peak power levels. The system 10 comprises at least one base station and at least one remote unit. Both the base stations and the remote units include transmitter and receiver sections. The transmitters and receiver sections of the base stations are essentially identical for the purpose of this invention. Practically, because of FCC peak power limitations, the remote units are more likely to transmit fewer OFDM tones simultaneously. However, for all intents and purposes, the description of the transmitter applies equally well to base station and remote unit transmitters, and the description of the receiver applies equally well to base station and remote unit receivers.

Transmitter 12 has a port which accepts a message on line 14 to a channel input. The message includes digital data which represents either a voice communication or digitally formatted information. One practical application for the present invention's data randomization process is for the transmission of large messages at high data rates. This form of data is more likely to include significant patterns of repetitious data.

Transmitter 12 includes a scrambler 16 to accept the message. As is explained in more detail below, scrambler 16 has an output on line 18 to provide a randomized pattern of digital data, or a randomized message, also called a scrambled message. Modulator 20 accepts the scrambled message and provides a modulated form of the scrambled message on line 22. QAM (quadrature amplitude modulation), PSK (phase-shift keying), and QPSK (quadrature PSK) modulation formats are particularly applicable; however, the invention is not limited to any specific modulation format. The modulated message is accepted by a mapper 24, which maps the modulated data into OFDM tones. It is at this stage of the process that the tone amplitudes and phases are assigned.

The exemplary OFDM system transmitter is capable of transmitting 288 tones simultaneously. There are 16 frequency bands, with 18 tones in each frequency band. However, the transmitter channel into which the message has been inserted may use any number of frequency bands at any one time for the transmission of the message. The remaining frequency bands are represented by lines 26a, 26b, and 26n. The sum of the tones in all the frequency bands are represented by line 28, which is connected to antenna 30. However, it should be understood that the success of the present invention is not limited by the number of frequency bands assigned to a channel, or how many time slots a message is spread across.

Receiver 50, whether it is a remote unit or base station receiver, operates to essentially reverse the modulation and scrambling to recover the message. Receiver 50 has an antenna 52 to accept the radiated signal from the transmitter 12. This signal on line 54 may carry OFDM tones relating to other channels connected on lines 56a, 56b, and 56n, where the channels on lines 26a and 56a, 26b and 56b, and 26n and 56n correspond, respectively. The message-bearing channel is accepted by de-mapper 58, which converts the amplitude and phase of the tones into a modulated digital signal on line 60. It is understood that the de-mapper 58 also includes a tone equalizer function. The demodulator 62 demodulates the message, using the same format as used by transmitter modulator 20. Then, the message is descrambled, or de-randomized, by descrambler 66, and the original message is output on line 68.

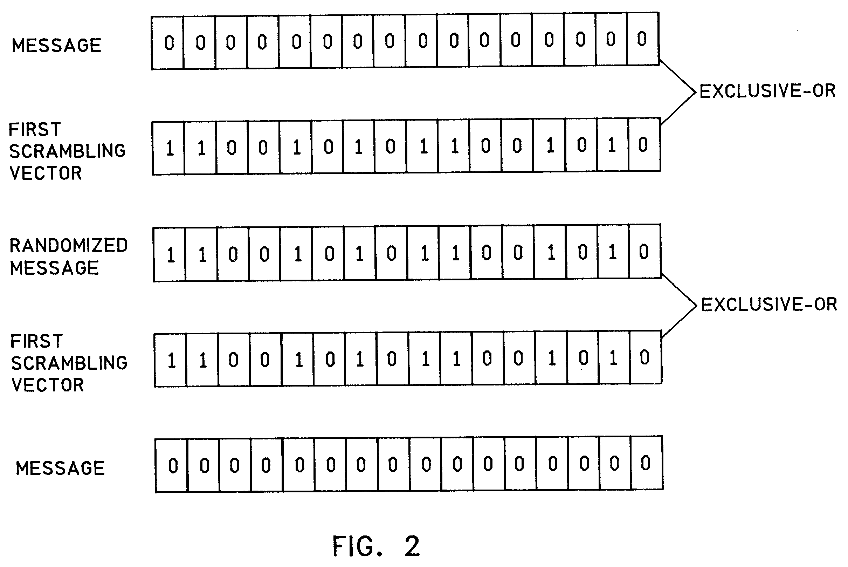

Fig. 2 illustrates the randomization process which scrambles digital data patterns in a message. To create a message with a random pattern of digital data, the message (with a non-random pattern of digital data, such as a series of "0"s or a series of "1"s) is combined with a scrambling vector. Many processes would be applicable, but the present invention is illustrated using an exclusive-or addition process, also referred to as modulo two addition. Every bit in the scrambling vector is added to a corresponding bit in the message, and the carries in the addition process are discarded. The result is most likely to be a message with a random pattern of digital data. As shown, a message including a series of "0"s is combined with a first scrambling vector. To recover the actual message from the randomized message, the first scrambling vector is removed from the randomized message. That is, the first scrambling vector is removed by another exclusive-or addition process to recover the original message. Note that the same vector must be used to unscramble as was used to originally scramble the message.

The present invention is not limited to any particular length of scrambling vector, or any particular number of scrambling vectors. In the exemplary OFDM system, the length of the scrambling vector has been chosen to have a length of 16 bits, as shown in Fig. 2. Most messages, however, are longer than 16 bits. To prevent the emergence of digital data patterns which may result from the continual reuse of the same scrambling vector, a plurality of scrambling vectors are used for the scrambling of digital data.

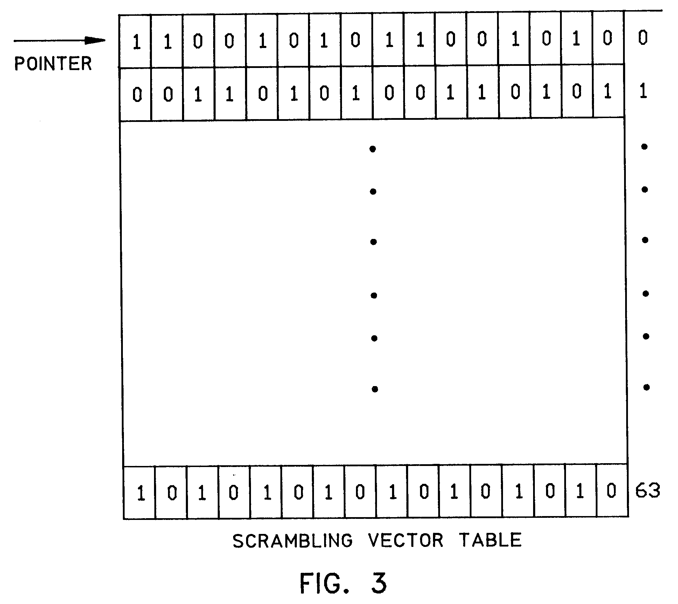

Fig. 3 illustrates a table of scrambling vectors that are used by both the scrambler 16 of the transmitter 12 and the descrambler 66 of the receiver 50 (see Fig. 1). The table represents 64 rows of scrambling vectors, where each row in the table is occupied by a 16-bit scrambling vector. The first scrambling vector of Fig. 2 is shown occupying row number "0". Messages that are longer than 16 bits require the use of additional scrambling vectors to continue the scrambling process. It would be feasible to devise an algorithm which redirects the pointer after the completion of the row in which the first scrambling vector is located. Preferably, the present invention continues the scrambling process by automatically incrementing the pointer to the next row (Row 1). If the first scrambling vector happens to be in the last row of the table, the pointer automatically wraps around to select the first row in the table (Row 0) when the pointer is incremented.

The table can be in a read-only memory in the scrambler/descrambler 16/66, or stored in memory that is in communication with the scrambler/descrambler 16/66. Likewise, the table can be generated from mathematical formulae in software or other apparatus that generates predetermined pseudo-random numbers when the units are turned on, and then stored. Alternately, the scrambling vectors can be calculated from a formula as they are used. Although the invention is not specifically limited to a table of 64 rows, 64 rows of 16-bit scrambling vectors are needed to scramble all the data transmitted in a single time slot in the exemplary OFDM system, using each of the scrambling vectors only once.

Obviously, it is critical that a receiver select the same scrambling vector, or series of vectors, that is used by the transmitter to scramble the original message. Any one of a number of algorithms could be devised to direct the table pointers. The exemplary OFDM system directs the pointer with an algorithm, which is responsive to the position of the message in the communication frame structure. As explained in the provisional application Serial No. 60/140,648, the basic unit of transmission in the OFDM system is the TDMA slot, which is 375 $\mu$s in duration. There are 288 information-bearing OFDM tones in a TDMA slot. These 288 tones are divided into 16 frequency slots (groups) of 18 tones each. When the 18 tones in the frequency slot are used for carrying digital data, 16 of the tones carry actual data using 16-QAM modulation. The other two tones are used as pilot tones for equalization purposes. A single tone modulated using 16-QAM modulation carries four bits of information. The sixteen information-bearing tones in a frequency slot, therefore, carry a total of 64 bits of information.

The TDMA slots are organized into a framing structure as follows. Eight TDMA slots constitute a TDMA frame of 3 ms in duration. A TDMA frame is also known as a NAC slot. Five NAC slots constitute a NAC frame of 15 ms in duration, also known as a BC slot. Thirty-two BC slots make up a BC frame of 480 ms in duration.

The formula used to direct the pointer is as follows:

$$pointer = [\ (NACSlotNum * 16) + BCSlot + (FreqSlotNum * 4)\ ]\ mod64$$

where NACSlotNum refers to the NAC slot number, BCSlot refers to the BC slot number, and FreqSlotNum refers to the frequency channel slot number.

Using the above formula, all of the scrambling table is used to scramble the data in each frequency slot differently. Another advantage of the above formula is that the scrambling vector used to scramble the data in a given frequency slot changes for each NAC slot and each BC slot. If the scrambling vector used in a first time slot does indeed cause a large peak in the time domain OFDM signal, causing it to be clipped by the power amplifier, then the data may not be recovered correctly by the receiver. In this case, the data is retransmitted in a second timeslot. The second time the data is transmitted, it is scrambled with a different scrambling vector, thus reducing the likelihood that a large peak will be present in the time domain OFDM signal in the second transmission.

Obviously, there are many other formulae that could be derived using the same framing system as described above. Other totally different systems could be used to direct the pointer, such as systems where the pointer is responsive to a system clock or a system where the base station directly commands the pointer position.

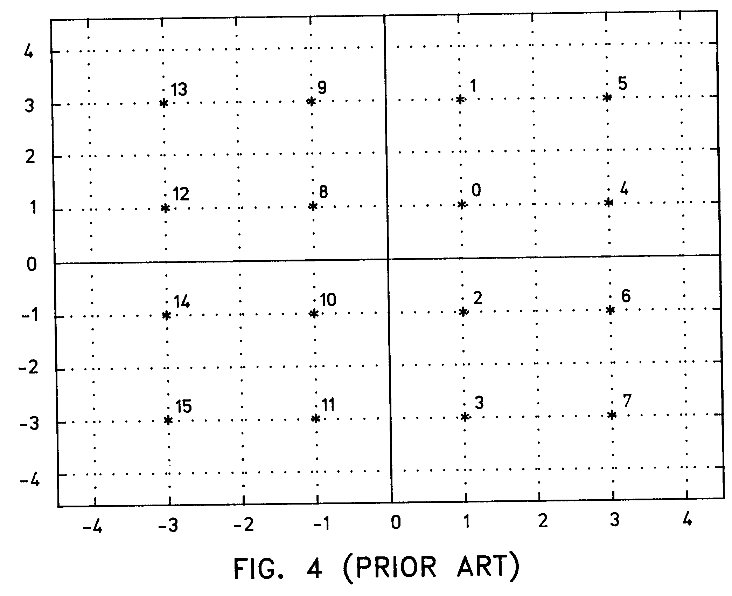

Fig. 4 is a 16-QAM constellation for encoding data using Gray Coding (prior art). The 16-QAM constellation and time domain plots of OFDM waveforms which follow are presented in order to clarify the advantages of scrambling digital data patterns.

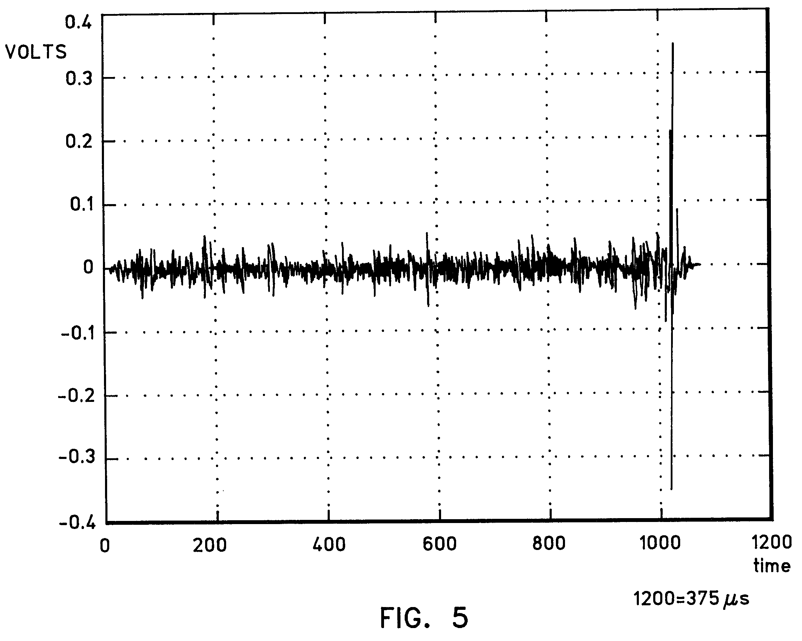

Fig. 5 illustrates an OFDM time domain waveform of 288 tones with no scrambling. The first 144 tones are selected from constellation point (-3, -3) (see Fig. 4). This constellation point represents the encoding of four binary ones. The other 144 tones are random data that have been modulated using 16-QAM. As can be seen in the Fig. 5, a large peak (22 dB peak to RMS ratio) is present in the time domain which corresponds to the pattern of ones.

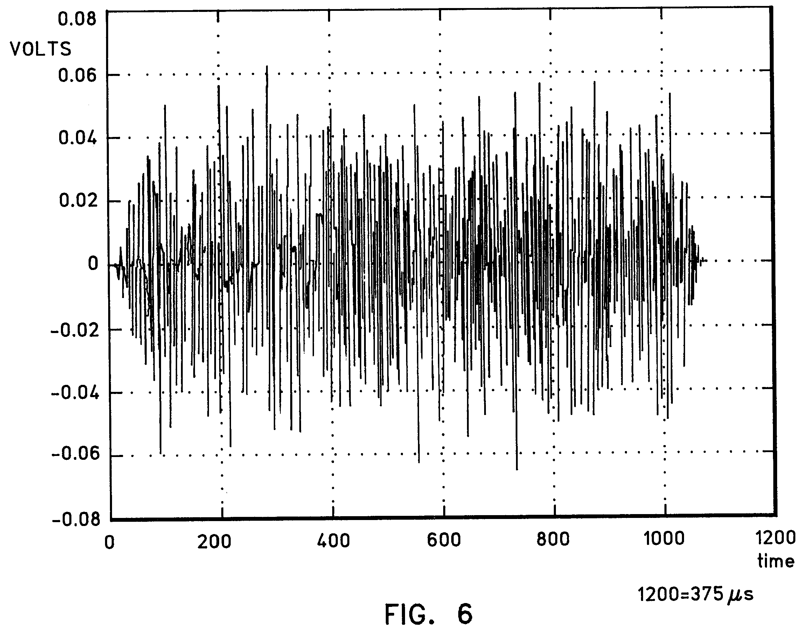

Fig. 6 illustrates an OFDM time domain waveform of 288 tones with scrambling. Data randomly distributed in the 16-QAM constellation, with no long patterns of ones or zeros, is transmitted. The peak to RMS ratio is only 9.5 dB. A comparison of Figs. 5 and 6 shows an improvement of over 10 dB peak to RMS power when the data is scrambled.

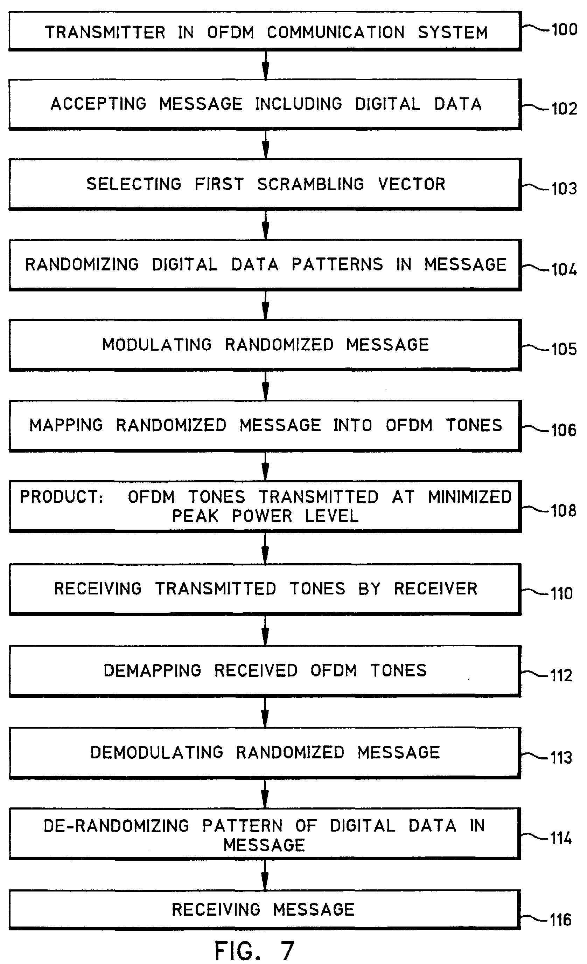

Fig. 7 is a flowchart illustrating a method for transmitting an OFDM waveform at a minimized peak power level. Alternately stated, the flowchart represents a method for minimizing the peak voltage of the tones in an OFDM communication. Although the method is presented as a sequence of numbered steps for the purpose of clarity, no order should be inferred from the numbering unless explicitly stated. Step 100 starts with a transmitter in an OFDM communication system. In step 102, the transmitter accepts a message including digital data. The transmitter accepts a message which is selected from the group including voice communications and high speed data formats. Step 104 randomizes digital data patterns in the message, creating a randomized message. Step 106 maps the randomized message into OFDM tones. Step 108 is a product where the OFDM tones are transmitted at a minimized peak power level.

The OFDM system of step 100 also includes a receiver and in step 110 the receiver receives the transmitted OFDM tones. Step 112 demaps the received OFDM tones into the randomized message. Step 114 de-randomizes the pattern of digital data in the message, and step 116 receives the message.

Preceding the mapping of the randomized message into OFDM tones, step 105 modulates the randomized message using a modulation format selected from the group including QPSK, PSK, and QAM modulation formats. Following the de-mapping of the received OFDM tones into the randomized message in step 112, step 113 demodulates the randomized message.

The randomization of the message in step 104 includes combining the digital data with a predetermined scrambling vector. Likewise, the de-randomization of the message in step 114 includes removing the scrambling vector from the message of digital data. Typically, the scrambling vector is a pseudo-random arrangement of digital data, and the combination of the digital data with the first scrambling vector in step 104 includes using an exclusive-or process to add the scrambling vector. Likewise, the removal of the scrambling vector from the digital data in step 114 includes using an exclusive-or process to add the scrambling vector.

In one aspect of the invention, a plurality of scrambling vectors are provided. Then, the method comprises further steps. Step 103 selects a first scrambling vector. Using the first scrambling vector, step 104 randomizes the pattern of digital data in the message. Likewise, using the first scrambling vector, step 114 de-randomizes the pattern of digital data in the message.

In some aspects of the invention, the transmitter includes a table with a first plurality of scrambling vectors arranged in a first plurality of rows, and the receiver includes a table with the first plurality of scrambling vectors arranged in a first plurality of rows. Then, the selection of the first scrambling vector for randomizing in step 103 includes using a selection algorithm to direct a pointer to a row in the scrambling vector table. Likewise, the selection of the first scrambling vector for de-randomizing in step 114 includes using the selection algorithm to direct a pointer to a row in the scrambling vector table.

Typically, the transmitter and the receiver use a common scrambling vector table. In some aspects of the invention step 108 includes the OFDM tones being transmitted in a first position in a frame structure. The selection algorithm used in steps 103 and 114 includes selecting a first row in the tables in response to the first position of the OFDM tones in the frame structure.

In some aspects of the invention, each row of the table includes a scrambling vector of 16 bits. When the acceptance of the message in step 102 includes receiving a message of at least 16 bits, then the selection of the scrambling vector in step 103 includes the pointer being automatically incremented to the next row in the table after the first row is used. Likewise, the de-randomization of the message in step 114 includes the pointer being automatically incremented to the next row in the table after the first row is used.

In some aspects of the invention, more than one message is being transmitted simultaneously, so that at least two messages require that their data be randomized. Then, the acceptance of a message in step 102 includes the transmitter accepting a second plurality of messages including digital data. The randomization of the message in step 104 includes randomizing the digital data patterns in a second plurality of messages. The mapping of the randomized message into OFDM tones in step 106 includes mapping the second plurality of randomized messages into OFDM tones. Likewise, the de-mapping of the received OFDM tones into the randomized message in step 112 includes the receiver de-mapping the OFDM tones into a second plurality of randomized messages. The de-randomizing of the message in step 114 includes de-randomizing the second plurality of messages, and the receiving of the message in step 116 includes receiving the second plurality of messages.

The system and method for randomizing digital data patterns described above is helpful in reducing degradations due to non-linearity, and for reducing power consumption in power amplifiers. An exemplary OFDM communication system was used to illustrate the workings of the invention, but the invention is not strictly limited to the OFDM system used in the descriptions. Other embodiments and variations to the invention will occur to those skilled in the art.

**Claims**

1. A method for minimizing the peak voltage of tones in an orthogonal frequency division multiplexed, OFDM, communication, the method comprising:

   accepting a message including digital data (102);
   randomizing digital data patterns in the message, to create a randomized message, using a scrambling vector selected from a plurality of scrambling vectors;
   mapping the randomized message into OFDM tones (106); and
   transmitting the OFDM tones (108);
   **characterised in that**:

   said scrambling vector selected from a plurality of scrambling vectors is based on a position of the randomized message in a frame structure of the OFDM communication (104); and
   said randomizing includes selecting the scrambling vector from the plurality of scrambling vectors at least partially based on a Network Access Channel, NAC, slot number, a Broadcast Channel, BC, slot number, and a frequency channel, Freq, slot number of the OFDM communication.

2. The method of claim 1, further comprising:

   receiving the transmitted OFDM tones;
   de-mapping the received OFDM tones into the randomized message;
   de-randomizing the pattern of digital data in the randomized message; and
   receiving the message.

3. The method of claim 2 in which the de-randomization of the message includes removing the scrambling vector from the randomized message.

4. The method of claim 3 wherein the scrambling vector is a pseudo-random arrangement of digital data, and wherein randomizing the message includes adding the digital data to the scrambling vector using an exclusive-or process.

5. The method of claim 4 wherein de-randomizing the message includes removing the scrambling vector from the digital data using an exclusive-or process.

6. The method of claim 5 wherein a transmitter is included having a first table including the plurality of scrambling vectors arranged in a plurality of rows of the first table, and wherein a receiver is included having a second table with the plurality of scrambling vectors arranged in a plurality of rows;
   wherein accepting the message includes accepting the message by the transmitter;
   wherein selecting the scrambling vector for randomizing includes using a selection algorithm to direct a first pointer to a first row in the first table;
   wherein receiving the message includes receiving the transmitted OFDM tones from the transmitter by the receiver;

and

wherein de-randomizing includes using the selection algorithm to direct a second pointer to a first row in the second table.

7. The method of claim 6 in which contents of the first table are the same as the contents of the second table; wherein the OFDM tones are transmitted in a frame structure; and wherein the de-randomizing includes using the selection algorithm to select the first row in the second table according to a frame structure of the OFDM communication.

8. The method of claim 7 wherein each row of the first table includes a scrambling vector of 16 bits; wherein accepting the message for transmission includes receiving a message of at least 16 bits; wherein selecting the scrambling vector for randomizing the message includes the first pointer being automatically incremented to the next row in the first table, after the first row of the first table is used; and wherein de-randomizing the randomized message includes the second pointer being automatically incremented to the next row in the second table after the first row of the second table is used.

9. The method of claim 2 further comprising:

preceding the mapping of the randomized message into OFDM tones, modulating the randomized message; and following the de-mapping of the received OFDM tones into the randomized message, demodulating the randomized message.

10. The method of claim 9 in which the randomized message is modulated using QPSK, QAM, or PSK.

11. The method of any preceding claim, wherein the message is a voice communications message or a high speed data message.

12. The method of any one of claims 2 to 11, wherein accepting a message for transmission includes accepting a second plurality of messages including digital data; wherein randomizing the message includes randomizing the digital data patterns in a second plurality of messages; wherein mapping of the randomized message into OFDM tones includes mapping the second plurality of randomized messages into OFDM tones; wherein de-mapping of the received OFDM tones into the randomized message includes the receiver de-mapping the OFDM tones into a second plurality of randomized messages; wherein de-randomizing of the message includes de-randomizing the second plurality of messages; and wherein receiving of the message includes the receiver receiving the second plurality of messages.

13. The method according to any one of claims 1 to 12 wherein the position includes a position in frequency and a position in time of the randomized message in the OFDM communication.

14. The method according to any one of claims 1 to 12 wherein the scrambling vector is selected according to:

$[(NACSlotNum \times N_1)+BCSlot+(FreqSlotNum \times N_2)]modN_3$,

wherein NACSlotNum is the NAC slot number, $N_1$ is a number of data bearing tones per OFDM frequency slot of the OFDM communication, BCSlot is the BC slot number, $N_2$ is a number of bits of information per data bearing tone of the OFDM communication, FreqSlotNum is the Freq slot number, and $N_3$ is a number of scrambling vectors in the predetermined set of scrambling vectors of the OFDM communication.

15. A system (10) for the communication of orthogonal frequency division multiplexed, OFDM, tones having a minimized peak power level, the system (10) comprising:

a base station including:

a transmitter (12) having a port to accept a first message including digital data, the transmitter (12) including a scrambler (16) to randomize the pattern of digital data in the first message, to generate a first randomized message using a scrambling vector selected based on a position of the first randomized message in a frame structure of an OFDM communication, a first table storing a plurality of scrambling vectors, a modulator (20) to modulate the randomized first message, and a mapper (24) to map the modulated first message into OFDM tones for transmission by a power amplifier, wherein the scrambler is configured to select the scrambling vector from the plurality of scrambling vectors at least partially based on a Network Access Channel , NAC, slot number, a Broadcast Channel, BC, slot number, and a frequency channel , Freq, slot number of the OFDM communication; and

a remote unit including:

a receiver (50) to accept OFDM tones transmitted from the base station, the receiver (50) including a de-mapper (58) to de-map the OFDM tones into the modulated first message, a demodulator_(62) to demodulate the randomized first message, a descrambler (66) to de-randomize the randomized first message using the scrambling vector and to provide the first message at a port.

16. The system of claim 15 in which the base station transmitter scrambler combines the scrambling vector and the first digital data using an exclusive-or process to add the scrambling vector to the first digital data; and
in which the remote unit receiver descrambler removes the scrambling vector using an exclusive-or process to remove the scrambling vector from the first digital data.

17. The system of claim 16 in which the base station transmitter includes the first table with a first plurality of scrambling vectors organized in a first plurality of rows;
in which the base station transmitter scrambler employs a selection algorithm to direct a first pointer to a first row in the first table;
in which the remote unit receiver descrambler includes a second table including the same contents as the first table; and
in which the remote unit receiver employs the selection algorithm to direct a second pointer to the first row in the second table.

18. The system of claim 17 in which the first and second tables have rows, where each row of the first and second tables includes a scrambling vector of 16 bits;
in which the base station transmitter accepts a message including at least 16 bits;
in which the base station transmitter scrambler automatically increments the first pointer to the next row in the first table after the first row is used; and
in which the remote unit receiver descrambler automatically increments the second pointer to the next row in the second table after the first row is used.

19. The system of any one of claims 15 to 18 wherein the position includes a position in frequency and a position in time of the randomized message in the OFDM communication.

20. The system of any one of claims 15 to 18 wherein the scrambling vector is selected according to:

$$[(NACSlotNum \times N_1) + BCSlot + (FreqSlotNum \times N_2)] mod N_3,$$

wherein, NACSlotNum is a Network Access Channel, NAC, slot number, $N_1$ is a number of data bearing tones per OFDM frequency slot of the OFDM communication, BCSlot is a Broadcast Channel, BC, slot number, $N_2$ is a number of bits of information per data bearing tone of the OFDM communication, FreqSlotNum is a frequency channel slot number, and $N_3$ is a number of scrambling vectors in the predetermined set of scrambling vectors of the OFDM communication.

**Patentansprüche**

1. Verfahren zum Minimieren der Spitzenspannung von Tönen bei einer Kommunikation in einem orthogonalen Frequenzmultiplexverfahren OFDM, wobei das Verfahren Folgendes umfasst:

Annehmen einer Nachricht, die digitale Daten beinhaltet (102),
Randomisieren digitaler Datenmuster in der Nachricht mit Hilfe eines Verwürfelungsvektors, der aus mehreren Verwürfelungsvektoren ausgewählt wird, um eine randomisierte Nachricht zu erzeugen,
Mapping der randomisierten Nachricht in OFDM-Töne (106) und

Senden der OFDM-Töne (108),
**dadurch gekennzeichnet, dass**:

der aus mehreren Verwürfelungsvektoren ausgewählte Verwürfelungsvektor auf einer Position der randomisierten Nachricht in einer Frame-Struktur der OFDM-Kommunikation (104) basiert und
das Randomisieren das Auswählen des Verwürfelungsvektors aus den mehreren Verwürfelungsvektoren zumindest teilweise basierend auf einer Schlitzanzahl eines Netzwerkzugangskanals, NAC, einer Schlitzanzahl eines Rundsendekanals, BC, und einer Schlitzanzahl eines Frequenzkanals, Freq, der OFDM-Kommunikation beinhaltet.

2. Verfahren nach Anspruch 1, ferner Folgendes umfassend:

Empfangen der gesendeten OFDM-Töne,
Demapping der empfangenen OFDM-Töne in die randomisierte Nachricht,
Derandomisieren des Musters der digitalen Daten in der randomisierten Nachricht und
Empfangen der Nachricht.

3. Verfahren nach Anspruch 2, wobei das Derandomisieren der Nachricht das Entfernen des Verwürfelungsvektors aus der randomisierten Nachricht beinhaltet.

4. Verfahren nach Anspruch 3, wobei der Verwürfelungsvektor eine Pseudo-Random-Anordnung digitaler Daten ist und wobei das Randomisieren der Nachricht das Hinzufügen digitaler Daten zum Verwürfelungsvektor unter Verwendung eines Exklusive-Oder-Prozesses beinhaltet.

5. Verfahren nach Anspruch 4, wobei das Derandomisieren der Nachricht das Entfernen des Verwürfelungsvektors aus den digitalen Daten unter Verwendung eines Exklusive-Oder-Prozesses beinhaltet.

6. Verfahren nach Anspruch 5, wobei ein Sender enthalten ist, der eine erste Tabelle aufweist, welche die mehreren Verwürfelungsvektoren aufweist, die in mehreren Zeilen der ersten Tabelle angeordnet sind, und wobei ein Empfänger enthalten ist, der eine zweite Tabelle mit den mehreren Verwürfelungsvektoren aufweist, die in mehreren Zeilen angeordnet sind,
wobei das Annehmen der Nachricht das Annehmen der Nachricht durch den Sender beinhaltet,
wobei das Auswählen des Verwürfelungsvektors zum Randomisieren das Verwenden eines Auswahlalgorithmus beinhaltet, um einen ersten Zeiger auf eine erste Zeile in der ersten Tabelle zu richten,
wobei das Empfangen der Nachricht das Empfangen der vom Sender gesendeten OFDM-Töne durch den Empfänger beinhaltet und
wobei das Derandomisieren das Verwenden des Auswahlalgorithmus beinhaltet, um einen zweiten Zeiger auf eine erste Zeile in der zweiten Tabelle zu richten.

7. Verfahren nach Anspruch 6, wobei die Inhalte der ersten Tabelle gleich den Inhalten der zweiten Tabelle sind,
wobei die OFDM-Töne in einer Frame-Struktur gesendet werden und
wobei das Derandomisieren das Verwenden des Auswahlalgorithmus beinhaltet, um die erste Zeile in der zweiten Tabelle gemäß einer Frame-Struktur der OFDM-Kommunikation auszuwählen.

8. Verfahren nach Anspruch 7, wobei jede Zeile der ersten Tabelle einen Verwürfelungsvektor von 16 Bit beinhaltet,
wobei das Annehmen der Nachricht zum Senden das Empfangen einer Nachricht von mindestens 16 Bit beinhaltet,
wobei das Auswählen des Verwürfelungsvektors zum Randomisieren der Nachricht beinhaltet, dass der erste Zeiger automatisch auf die nächste Zeile in der ersten Tabelle inkrementiert wird, nachdem die erste Zeile der ersten Tabelle verwendet wurde, und
wobei das Derandomisieren der randomisierten Nachricht beinhaltet, dass der zweite Zeiger automatisch auf die nächste Zeile in der zweiten Tabelle inkrementiert wird, nachdem die erste Zeile der zweiten Tabelle verwendet wurde.

9. Verfahren nach Anspruch 2, ferner Folgendes umfassend:

Modulieren der randomisierten Nachricht vor dem Mapping der randomisierten Nachricht in OFDM-Töne und
Demodulieren der randomisierten Nachricht nach dem Demapping der empfangenen OFDM-Töne in die randomisierte Nachricht.

10. Verfahren nach Anspruch 9, wobei die randomisierte Nachricht unter Verwendung von QPSK, QAM oder PSK moduliert wird.

11. Verfahren nach einem der vorhergehenden Ansprüche, wobei die Nachricht eine Sprachkommunikationsnachricht oder eine Hochgeschwindigkeitsdatennachricht ist.

12. Verfahren nach einem der Ansprüche 2 bis 11, wobei das Annehmen einer Nachricht zum Senden das Annehmen zweiter mehrerer Nachrichten beinhaltet, die digitale Daten beinhalten, wobei das Randomisieren der Nachricht das Randomisieren der digitalen Datenmuster in zweiten mehreren Nachrichten beinhaltet, wobei das Mapping der randomisierten Nachricht in OFDM-Töne das Mapping der zweiten mehreren randomisierten Nachrichten in OFDM-Töne beinhaltet, wobei das Demapping der empfangenen OFDM-Töne in die randomisierte Nachricht das Demapping der OFDM-Töne in zweite mehrere randomisierte Nachrichten durch den Empfänger beinhaltet, wobei das Derandomisieren der Nachricht das Derandomisieren der zweiten mehreren Nachrichten beinhaltet und wobei das Empfangen der Nachricht das Empfangen der zweiten mehreren Nachrichten durch den Empfänger beinhaltet.

13. Verfahren nach einem der Ansprüche 1 bis 12, wobei die Position eine Frequenz-Position und eine Zeit-Position der randomisierten Nachricht in der OFDM-Kommunikation beinhaltet.

14. Verfahren nach einem der Ansprüche 1 bis 12, wobei der Verwürfelungsvektor gemäß dem Folgenden ausgewählt wird:

$$[(NACSlotNum \times N_1) + BCSlot + (FreqSlotNum \times N_2)] mod N_3,$$

wobei NACSlotNum die NAC-Schlitzanzahl ist, $N_1$ eine Anzahl von datentragenden Tönen pro OFDM-Frequenzschlitz der OFDM-Kommunikation ist, BCSlot die BC-Schlitzanzahl ist, $N_2$ eine Anzahl von Informationsbits pro datentragendem Ton der OFDM-Kommunikation ist, FreqSlotNum die Frequenzschlitzanzahl ist und $N_3$ eine Anzahl von Verwürfelungsvektoren im festgelegten Satz von Verwürfelungsvektoren der OFDM-Kommunikation ist.

15. System (10) für die Kommunikation von Tönen im orthogonalen Frequenzmultiplexverfahren OFDM mit einem minimierten Spitzenleistungsniveau, wobei das System (10) Folgendes umfasst:

eine Basisstation, die Folgendes beinhaltet:

einen Sender (12) mit einem Port zum Annehmen einer ersten Nachricht, die digitale Daten beinhaltet, wobei der Sender (12) einen Verwürfeler (16) zum Randomisieren des Musters der digitalen Daten in der ersten Nachricht beinhaltet, um unter Verwendung eines Verwürfelungsvektors, der basierend auf einer Position der ersten randomisierten Nachricht in einer Frame-Struktur der OFDM-Kommunikation ausgewählt wird, eine erste randomisierte Nachricht zu erzeugen, eine erste Tabelle, die mehrere Verwürfelungsvektoren speichert, einen Modulator (20), um die randomisierte erste Nachricht zu modulieren, und einen Mapper (24) für das Mapping der modulierten ersten Nachricht in OFDM-Töne zum Senden durch einen Leistungsverstärker beinhaltet, wobei der Verwürfeler dafür konfiguriert ist, den Verwürfelungsvektor aus den mehreren Verwürfelungsvektoren zumindest teilweise basierend auf einer Schlitzanzahl eines Netzwerkzugangskanals, NAC, einer Schlitzanzahl eines Rundsendekanals, BC, und einer Schlitzanzahl eines Frequenzkanals, Freq, der OFDM-Kommunikation auszuwählen, und eine entfernte Einheit, die Folgendes beinhaltet:

einen Empfänger (50) zum Annehmen der OFDM-Töne, die von der Basisstation gesendet werden, wobei der Empfänger (50) einen Demapper (58) für das Demapping der OFDM-Töne in die modulierte erste Nachricht beinhaltet, einen Demodulator (62) für das Demodulieren der randomisierten ersten Nachricht, einen Entwürfeler (66) für das Derandomisieren der randomisierten ersten Nachricht unter Verwendung des Verwürfelungsvektors und zum Bereitstellen der ersten Nachricht an einem Port.

16. System nach Anspruch 15, wobei der Verwürfeler des Senders der Basisstation den Verwürfelungsvektor und die ersten digitalen Daten unter Verwendung eines Exklusive-Oder-Prozesses kombiniert, um den ersten digitalen Daten den Verwürfelungsvektor hinzuzufügen, und

wobei der Entwürfeler des Empfängers der entfernten Einheit den Verwürfelungsvektor unter Verwendung eines Exklusive-Oder-Prozesses entfernt, um den Verwürfelungsvektor von den ersten digitalen Daten zu entfernen.

17. System nach Anspruch 16, wobei der Sender der Basisstation die erste Tabelle mit ersten mehreren Verwürfelungsvektoren beinhaltet, die in ersten mehreren Zeilen organisiert sind,

wobei der Verwürfeler des Senders der Basisstation einen Auswahlalgorithmus verwendet, um einen ersten Zeiger auf eine erste Zeile in der ersten Tabelle zu richten,

wobei der Entwürfeler des Empfängers der entfernten Einheit eine zweite Tabelle beinhaltet, welche die gleichen Inhalte beinhaltet wie die erste Tabelle, und

wobei der Empfänger der entfernten Einheit den Auswahlalgorithmus verwendet, um einen zweiten Zeiger auf die erste Zeile in der zweiten Tabelle zu richten.

18. System nach Anspruch 17, wobei die erste und die zweite Tabelle Zeilen aufweisen, wobei jede Zeile der ersten und der zweiten Tabelle einen Verwürfelungsvektor von 16 Bit beinhaltet,

wobei der Sender der Basisstation eine Nachricht annimmt, die mindestens 16 Bit beinhaltet,

wobei der Verwürfeler des Senders der Basisstation den ersten Zeiger automatisch auf die nächste Zeile in der ersten Tabelle inkrementiert, nachdem die erste Zeile verwendet wurde, und

wobei der Entwürfeler des Empfängers der entfernten Einheit den zweiten Zeiger automatisch auf die nächste Zeile in der zweiten Tabelle inkrementiert, nachdem die erste Zeile verwendet wurde.

19. System nach einem der Ansprüche 15 bis 18, wobei die Position eine Frequenz-Position und eine Zeit-Position der randomisierten Nachricht in der OFDM-Kommunikation beinhaltet.

20. System nach einem der Ansprüche 15 bis 18, wobei der Verwürfelungsvektor gemäß dem Folgenden gewählt ist:

$$[(NACSlotNum \times N_1) + BCSlot + (FreqSlotNum \times N_2)] mod N_3,$$

wobei NACSlotNum die Schlitzanzahl in einem Netzwerkzugangskanal, NAC, ist, $N_1$ eine Anzahl von datentragenden Tönen pro OFDM-Frequenzschlitz der OFDM-Kommunikation ist, BCSlot die Schlitzanzahl in einem Rundsendekanal, BC, ist, $N_2$ eine Anzahl von Informationsbits pro datentragendem Ton der OFDM-Kommunikation ist, FreqSlotNum die Frequenzschlitzanzahl ist und $N_3$ eine Anzahl von Verwürfelungsvektoren im festgelegten Satz von Verwürfelungsvektoren der OFDM-Kommunikation ist.

## Revendications

1. Procédé pour minimiser la tension de crête de tonalités dans une communication multiplexée par répartition orthogonale de la fréquence, OFDM, le procédé comprenant les étapes ci-dessous consistant à :

accepter un message incluant des données numériques (102) ;
randomiser des motifs de données numériques dans le message, en vue de créer un message randomisé, en utilisant un vecteur d'embrouillage sélectionné parmi une pluralité de vecteurs d'embrouillage ;
mapper le message randomisé dans des tonalités OFDM (106) ; et
transmettre les tonalités OFDM (108) ;
**caractérisé en ce que** :

ledit vecteur d'embrouillage sélectionné parmi une pluralité de vecteurs d'embrouillage est basé sur une position du message randomisé dans une structure de trame de la communication OFDM (104) ; et
ladite étape de randomisation comprend l'étape consistant à sélectionner le vecteur d'embrouillage parmi la pluralité de vecteurs d'embrouillage au moins en partie sur la base d'un numéro de fente de canal d'accès au réseau, NAC, d'un numéro de fente de canal de diffusion, BC, et d'un numéro de fente de canal de fréquence, Freq, de la communication OFDM.

2. Procédé selon la revendication 1, comprenant en outre les étapes ci-dessous consistant à :

recevoir les tonalités OFDM transmises ;
démapper les tonalités OFDM reçues dans le message randomisé ;
dé-randomiser le motif de données numériques dans le message randomisé ; et
recevoir le message.

3. Procédé selon la revendication 2, dans lequel l'étape de dé-randomisation du message inclut l'étape consistant à supprimer le vecteur d'embrouillage du message randomisé.

4. Procédé selon la revendication 3, dans lequel le vecteur d'embrouillage est un agencement pseudoaléatoire de données numériques, et dans lequel l'étape de randomisation du message inclut l'étape consistant à ajouter les données numériques au vecteur d'embrouillage en faisant appel à un processus d'opération booléenne OU exclusif.

5. Procédé selon la revendication 4, dans lequel l'étape de dé-randomisation du message inclut l'étape consistant à supprimer le vecteur d'embrouillage des données numériques en faisant appel à un processus d'opération booléenne OU exclusif.

6. Procédé selon la revendication 5, dans lequel un émetteur est inclus, lequel présente une première table incluant la pluralité de vecteurs d'embrouillage agencée dans une pluralité de lignes de la première table, et dans lequel un récepteur est inclus, lequel présente une seconde table avec la pluralité de vecteurs d'embrouillage agencée dans une pluralité de lignes ;
dans lequel l'étape d'acceptation du message consiste à faire accepter le message par l'émetteur ;
dans lequel l'étape de sélection du vecteur d'embrouillage en vue d'une randomisation comprend l'étape consistant à utiliser un algorithme de sélection en vue de diriger un premier pointeur vers une première ligne dans la première table ;
dans lequel l'étape de réception du message consiste à recevoir les tonalités OFDM transmises à partir de l'émetteur, par le biais du récepteur ; et
dans lequel l'étape de dé-randomisation inclut l'étape consistant à utiliser l'algorithme de sélection en vue de diriger un second pointeur vers une première ligne dans la seconde table.

7. Procédé selon la revendication 6, dans lequel des contenus de la première table sont les mêmes que des contenus de la seconde table ;
dans lequel les tonalités OFDM sont transmises dans une structure de trame ; et
dans lequel l'étape de dé-randomisation inclut l'étape consistant à utiliser l'algorithme de sélection en vue de sélectionner la première ligne dans la seconde table selon une structure de trame de la communication OFDM.

8. Procédé selon la revendication 7, dans lequel chaque ligne de la première table inclut un vecteur d'embrouillage de 16 bits ;
dans lequel l'étape d'acceptation du message en vue d'une transmission inclut l'étape consistant à recevoir un message d'au moins 16 bits ;
dans lequel l'étape de sélection du vecteur d'embrouillage en vue de randomiser le message inclut l'étape dans laquelle le premier pointeur est automatiquement incrémenté à la ligne successive dans la première table, après que la première ligne de la première table est utilisée ; et
dans lequel l'étape de dé-randomisation du message randomisé inclut l'étape dans laquelle le second pointeur est automatiquement incrémenté à la ligne successive dans la seconde table, après que la première ligne de la seconde table est utilisée.

9. Procédé selon la revendication 2, comprenant en outre les étapes ci-dessous consistant à :

précédemment à l'étape de mappage du message randomisé dans des tonalités OFDM, moduler le message randomisé ; et
suite à l'étape de démappage des tonalités OFDM reçues dans le message randomisé, démoduler le message randomisé.

10. Procédé selon la revendication 9, dans lequel le message randomisé est modulé en faisant appel à une modulation QPSK, QAM ou PSK.

11. Procédé selon l'une quelconque des revendications précédentes, dans lequel le message est un message de communication vocale ou un message de données haut débit.

**12.** Procédé selon l'une quelconque des revendications 2 à 11, dans lequel l'étape d'acceptation d'un message en vue d'une transmission consiste à accepter une seconde pluralité de messages incluant des données numériques ; dans lequel l'étape de randomisation du message consiste à randomiser les motifs de données numériques dans une seconde pluralité de messages ; dans lequel l'étape de mappage du message randomisé dans des tonalités OFDM consiste à mapper la seconde pluralité de messages randomisés dans des tonalités OFDM; dans lequel l'étape de démappage des tonalités OFDM reçues dans le message randomisé inclut l'étape dans laquelle le récepteur dé-mappe les tonalités OFDM dans une seconde pluralité de messages randomisés ; dans lequel l'étape de dé-randomisation du message consiste à dé-randomiser la seconde pluralité de messages ; et dans lequel l'étape de réception du message inclut l'étape dans laquelle le récepteur reçoit la seconde pluralité de messages.

**13.** Procédé selon l'une quelconque des revendications 1 à 12, dans lequel la position inclut une position en fréquence et une position dans le temps du message randomisé dans la communication OFDM.

**14.** Procédé selon l'une quelconque des revendications 1 à 12, dans lequel le vecteur d'embrouillage est sélectionné selon ce qui suit :

$$[(NACSlotNumxN_1) + BCSlot + (FreqSlotNumxN_2)]modN_3,$$

dans lequel NACSlotNum est le numéro de fente de canal NAC, $N_1$ est un nombre de tonalités de transport de données par fente de fréquence OFDM de la communication OFDM, BCSlot est le numéro de fente de canal BC, $N_2$ est un nombre de bits d'information par tonalité de transport de données de la communication OFDM, FreqSlotNum est le numéro de fente de canal Freq, et $N_3$ est un nombre de vecteurs d'embrouillage dans l'ensemble prédéterminé de vecteurs d'embrouillage de la communication OFDM.

**15.** Système (10) pour la communication de tonalités multiplexées par répartition orthogonale de la fréquence, OFDM, présentant un niveau de puissance de crête minimisé, le système (10), comprenant :

une station de base incluant :

un émetteur (12) présentant un port pour accepter un premier message incluant des données numériques, l'émetteur (12) incluant un embrouilleur (16) pour randomiser le motif de données numériques dans le premier message, pour générer un premier message randomisé en utilisant un vecteur d'embrouillage sélectionné sur la base d'une position du premier message randomisé dans une structure de trame d'une communication OFDM, une première table stockant une pluralité de vecteurs d'embrouillage, un modulateur (20) pour moduler le premier message randomisé, et un mappeur (24) pour mapper le premier message modulé dans des tonalités OFDM en vue d'une transmission par un amplificateur de puissance, dans lequel l'embrouilleur est configuré de manière à sélectionner le vecteur d'embrouillage parmi la pluralité de vecteurs d'embrouillage au moins en partie sur la base d'un numéro de fente de canal d'accès au réseau, NAC, d'un numéro de fente de canal de diffusion, BC, et d'un numéro de fente de canal de fréquence, Freq, de la communication OFDM ; et
une unité distante incluant :

un récepteur (50) pour accepter des tonalités OFDM transmises à partir de la station de base, le récepteur (50) incluant un dé-mappeur (58) pour démapper les tonalités OFDM dans le premier message modulé, un démodulateur (62) pour démoduler le premier message randomisé, un désembrouilleur (66) pour dé-randomiser le premier message randomisé en utilisant le vecteur d'embrouillage et pour fournir le premier message au niveau d'un port.

**16.** Système selon la revendication 15, dans lequel l'embrouilleur d'émetteur de station de base combine le vecteur d'embrouillage et les premières données numériques en utilisant un processus d'opération booléenne OU exclusif en vue d'ajouter le vecteur d'embrouillage aux premières données numériques ; et dans lequel le désembrouilleur de récepteur d'unité distante supprime le vecteur d'embrouillage en utilisant un processus d'opération booléenne OU exclusif en vue de supprimer le vecteur d'embrouillage des premières données numériques.

**17.** Système selon la revendication 16, dans lequel l'émetteur de station de base inclut la première table avec une première pluralité de vecteurs d'embrouillage organisée dans une première pluralité de lignes ;
dans lequel l'embrouilleur d'émetteur de station de base emploie un algorithme de sélection en vue de diriger un premier pointeur vers une première ligne dans la première table ;
dans lequel le désembrouilleur de récepteur d'unité distante inclut une seconde table incluant les mêmes contenus que la première table ; et
dans lequel le récepteur d'unité distante emploie l'algorithme de sélection en vue de diriger un second pointeur vers la première ligne dans la seconde table.

**18.** Système selon la revendication 17, dans lequel les première et seconde tables présentent des lignes, où chaque ligne des première et seconde tables inclut un vecteur d'embrouillage de 16 bits ;
dans lequel l'émetteur de station de base accepte un message comprenant au moins 16 bits ;
dans lequel l'embrouilleur d'émetteur de station de base incrémente automatiquement le premier pointeur à la ligne successive dans la première table, après que la première ligne est utilisée ; et
dans lequel le désembrouilleur de récepteur d'unité distante incrémente automatiquement le second pointeur à la ligne successive dans la seconde table, après que la première ligne est utilisée.

**19.** Système selon l'une quelconque des revendications 15 à 18, dans lequel la position inclut une position en fréquence et une position dans le temps du message randomisé dans la communication OFDM.

**20.** Système selon l'une quelconque des revendications 15 à 18, dans lequel le vecteur d'embrouillage est sélectionné selon ce qui suit :

$$[(NACSlotNumxN_1) + BCSlot + (FreqSlotNumxN_2)]modN_3,$$

dans lequel NACSlotNum est le numéro de fente de canal d'accès au réseau, NAC, $N_1$ est un nombre de tonalités de transport de données par fente de fréquence OFDM de la communication OFDM, BCSlot est le numéro de fente de canal de diffusion, BC, $N_2$ est un nombre de bits d'information par tonalité de transport de données de la communication OFDM, FreqSlotNum est un numéro de fente de canal de fréquence, et $N_3$ est un nombre de vecteurs d'embrouillage dans l'ensemble prédéterminé de vecteurs d'embrouillage de la communication OFDM.

FIG. 1

MESSAGE | 0 | 0 | 0 | 0 | 0 | 0 | 0 | 0 | 0 | 0 | 0 | 0 | 0 | 0 | 0 | 0

EXCLUSIVE-OR

FIRST SCRAMBLING VECTOR | 1 | 1 | 0 | 0 | 1 | 0 | 1 | 0 | 1 | 1 | 0 | 0 | 1 | 0 | 1 | 0

RANDOMIZED MESSAGE | 1 | 1 | 0 | 0 | 1 | 0 | 1 | 0 | 1 | 1 | 0 | 0 | 1 | 0 | 1 | 0

EXCLUSIVE-OR

FIRST SCRAMBLING VECTOR | 1 | 1 | 0 | 0 | 1 | 0 | 1 | 0 | 1 | 1 | 0 | 0 | 1 | 0 | 1 | 0

MESSAGE | 0 | 0 | 0 | 0 | 0 | 0 | 0 | 0 | 0 | 0 | 0 | 0 | 0 | 0 | 0 | 0

FIG. 2

EP 1 188 284 B1

FIG. 3

SCRAMBLING VECTOR TABLE

FIG. 4 (PRIOR ART)

EP 1 188 284 B1

FIG. 5

1200=375 $\mu$s

FIG. 6

1200=375 μs

```
┌─────────────────────────────────────────────────┐
│   TRANSMITTER IN OFDM COMMUNICATION SYSTEM       │──100
└─────────────────────────────────────────────────┘
                        │
                        ▼
┌─────────────────────────────────────────────────┐
│   ACCEPTING MESSAGE INCLUDING DIGITAL DATA       │──102
└─────────────────────────────────────────────────┘
                        │
                        ▼
┌─────────────────────────────────────────────────┐
│   SELECTING FIRST SCRAMBLING VECTOR              │──103
└─────────────────────────────────────────────────┘
                        │
                        ▼
┌─────────────────────────────────────────────────┐
│   RANDOMIZING DIGITAL DATA PATTERNS IN MESSAGE   │──104
└─────────────────────────────────────────────────┘
                        │
                        ▼
┌─────────────────────────────────────────────────┐
│   MODULATING RANDOMIZED MESSAGE                  │──105
└─────────────────────────────────────────────────┘
                        │
                        ▼
┌─────────────────────────────────────────────────┐
│   MAPPING RANDOMIZED MESSAGE INTO OFDM TONES     │──106
└─────────────────────────────────────────────────┘
                        │
                        ▼
┌─────────────────────────────────────────────────┐
│   PRODUCT:  OFDM TONES TRANSMITTED AT MINIMIZED  │──108
│             PEAK POWER LEVEL                     │
└─────────────────────────────────────────────────┘
                        │
                        ▼
┌─────────────────────────────────────────────────┐
│   RECEIVING TRANSMITTED TONES BY RECEIVER        │──110
└─────────────────────────────────────────────────┘
                        │
                        ▼
┌─────────────────────────────────────────────────┐
│   DEMAPPING RECEIVED OFDM TONES                  │──112
└─────────────────────────────────────────────────┘
                        │
                        ▼
┌─────────────────────────────────────────────────┐
│   DEMODULATING RANDOMIZED MESSAGE               │──113
└─────────────────────────────────────────────────┘
                        │
                        ▼
┌─────────────────────────────────────────────────┐
│   DE-RANDOMIZING PATTERN OF DIGITAL DATA IN      │──114
│                 MESSAGE                          │
└─────────────────────────────────────────────────┘
                        │
                        ▼
┌─────────────────────────────────────────────────┐
│   RECEIVING MESSAGE                              │──116
└─────────────────────────────────────────────────┘
```

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 60140648 A

### Non-patent literature cited in the description

- Peak to Average Power Reduction for OFDM Schemes by Selective Scrambling. **VAN EETVELT P et al.** Electronics Letters. IEE, 10 October 1996, vol. 32, 1963-1964